Europäisches Patentamt

European Patent Office

Office européen des brevets

(11) Numéro de publication: **0 150 853**
**A2**

## (12) DEMANDE DE BREVET EUROPEEN

(21) Numéro de dépôt: 85100977.9

(22) Date de dépôt: 31.01.85

(51) Int. Cl.⁴: **H 02 J 9/06,** H 04 M 19/00

(30) Priorité: 02.02.84 FR 8401599

(43) Date de publication de la demande: 07.08.85
Bulletin 85/32

(84) Etats contractants désignés: **BE DE FR GB IT NL SE**

(71) Demandeur: **THOMSON-CSF TELEPHONE,**
**146, Boulevard de Valmy, F-92707 Colombes (FR)**

(72) Inventeur: **Thieffry, Jean-Bernard, 1bis, avenue Foch Les**
**Peupliers, F-95220 Herblay (FR)**

(74) Mandataire: **Weinmiller, Jürgen et al, Zeppelinstrasse 63,**
**D-8000 München 80 (DE)**

(54) Dispositif d'alimentation électrique.

(57) Ce dispositif d'alimentation de N modules utilisateurs $U_n$ comporte N sources d'alimentation $S_n$, l'alimentation du module utilisateur $U_n$ étant assurée concurremment par les sources d'alimentation $S_n$ et $S_{n-1}$, ce qui permet, par une entraide entre les différentes sources d'alimentation, de résoudre les problèmes de surcharge de modules utilisateurs ou de défaillance de sources d'alimentation.

Application notamment à l'alimentation d'équipements de commutation téléphonique.

ACTORUM AG

DISPOSITIF D'ALIMENTATION ELECTRIQUE

La présente invention concerne un dispositif d'alimentation électrique, et plus particulièrement un dispositif d'alimentation électrique de modules fonctionnels, autonomes et indépendants, appelés par la suite modules utilisateurs.

De tels arrangements de modules utilisateurs d'énergie électrique se rencontrent par exemple dans les équipements de transmission ou de commutation électronique.

Il est en effet connu d'organiser ces équipements de façon modulaire, de sorte qu'une panne à l'intérieur d'un ensemble de modules, souvent appelés unités de sécurité, n'affecte qu'un seul des modules dont il est constitué.

Pour respecter ce caractère modulaire, il est connu d'assurer l'alimentation de N modules utilisateurs au moyen de N sources d'alimentation assurant respectivement l'alimentation de chacun des N modules utilisateurs.

Un tel dispositif d'alimentation ne permet cependant pas de résoudre les problèmes posés d'une part par la défaillance d'une source d'alimentation, défaillance pouvant être due soit à une panne de la source d'alimentation elle-même, soit à un court-circuit du module utilisateur qui lui est associé, d'autre part par la surcharge d'un module utilisateur, surcharge due au fait que, comme c'est le cas notamment dans les équipements de transmission ou de commutation électronique, la consommation individuelle en énergie des différents modules utilisateurs peut présenter des variations aléatoires en fonction de différents facteurs tels que le temps ou la charge de travail supportée.

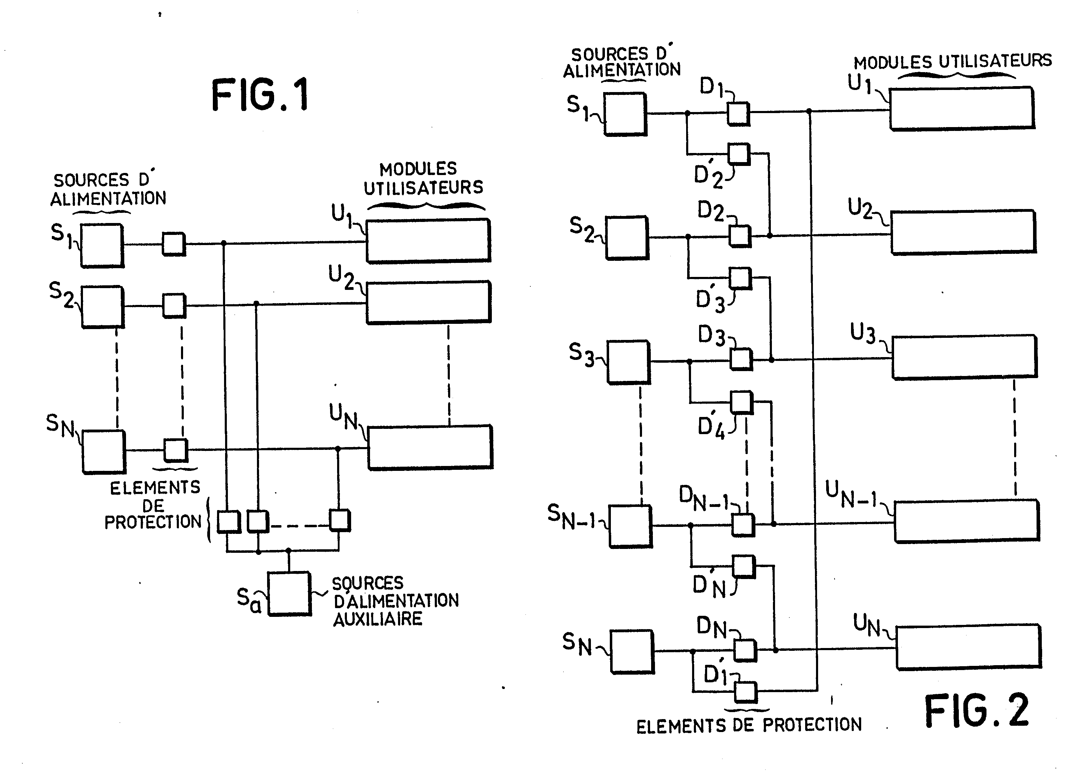

Pour résoudre ces problèmes il est connu, comme le montre la figure 1, de prévoir une source d'alimentation auxiliaire $S_a$, l'alimentation de chaque module utilisateur $U_n$ étant alors assurée concurremment par la source d'alimentation $S_n$ qui lui est associée (avec n variant de 1 à N) et par la source d'alimentation auxiliaire $S_a$. Un élément de protection est alors prévu entre chaque source d'alimentation et le module utilisateur qui lui est associé. Des éléments de protection sont également prévus entre la source d'alimentation auxiliaire et chacun des modules utilisateurs.

Mais, comme le montre la figure 1, cette solution a pour inconvénient, dans le cadre de la conception modulaire du matériel évoquée précédemment, de nécessiter un emplacement physique non banalisé, réservé à la source d'alimentation auxiliaire.

Par ailleurs, en raison de la localisation de la source d'alimentation auxiliaire, cette solution se prête mal à une régulation de la tension de sortie des sources d'alimentation, notamment lorsque celles-ci sont des sources de tension continue, cette régulation pouvant être imposée par des variations de chute de tension à travers, entre autres, les éléments de protection, en fonction de l'intensité du courant qui les traverse.

La présente invention permet d'éviter ces inconvénients. Le dispositif d'alimentation suivant l'invention permet en effet de remédier aux problèmes de surcharge des modules utilisateurs ou de défaillance des sources d'alimentation, tout en préservant la structure modulaire du matériel, et en facilitant les opérations de régulation évoquées ci-dessus.

Suivant l'invention, le dispositif d'alimentation électrique de N modules utilisateurs $U_n$ (n variant de 1 à N) comporte M sources d'alimentation $S_m$ (m variant de 1 à M, M étant égal à N ou à N+1 quand N > 1, et M étant égal à N + 1 quand N = 1), l'alimentation du module utilisateur $U_n$ (n variant de 2 à N) étant assurée concurremment par la source d'alimentation $S_n$ et par la source d'alimentation $S_{n-1}$, et l'alimentation du module utilisateur $U_1$ étant assurée concurrremment par la source d'alimentation $S_1$ et, soit la source d'alimentation $S_N$, soit la source d'alimentation $S_{N+1}$, suivant que M est égal à N ou à N+1, la source d'alimentation $S_m$ (m variant de 1 à M) fournissant une puissance

$$P_S \geqslant \frac{N-1}{N-2} P_U \, , \quad ou \quad P_S \geqslant P_U$$

(où $P_U$ est la puissance absorbée par le module utilisateur alimenté par cette source) suivant que M est égal à N ou à N+1.

Les objets et caractéristiques de la présente invention apparaîtront plus clairement à la lecture de la description suivante d'exemples de réalisation, faite en relation avec les dessins ci-annexés dans lesquels :

- la figure 1 représente un dispositif d'alimentation conforme à l'art antérieur ;

- la figure 2 représente un premier exemple de réalisation d'un dispositif d'alimentation conforme à l'invention ;

- la figure 3 représente un deuxième exemple de réalisation d'un dispositif d'alimentation conforme à l'invention.

Le dispositif d'alimentation de N modules utilisateurs $U_n$ (n variant de 1 à N) représenté sur la figure 2 comporte N sources d'alimentation $S_n$ (n variant de 1 à N), l'alimentation du module utilisateur $U_n$ (n variant de 2 à N) étant assurée concurremmment par les sources d'alimentation $S_n$ et $S_{n-1}$, et l'alimentation du module utilisateur $U_1$ étant assurée concurremment par les sources d'alimentation $S_1$ et $S_N$. Des éléments de protection $D_n$ et $D'_n$, tels que des diodes par exemple, sont prévus entre chaque module utilisateur $U_n$ et les sources d'alimentation qui lui sont associées.

La structure modulaire de ce dispositif d'alimentation apparaît ainsi nettement, en raison de la similitude de câblage des différents ensembles tels que $(S_1, D_1, D'_2)$, $(S_2, D_2, D'_3)$ ... $(S_N, D_N, D'_1)$, ce câblage facilitant également les opérations de régulation évoquées ci-dessus.

Par ailleurs cette organisation impliquant une entraide entre les différentes sources d'alimentation, les problèmes de surcharge de modules utilisateurs ou de défaillance de sources d'alimentation peuvent ainsi être résolus de manière particulièrement simple.

Cependant, pour assurer la même fiabilité que celle obtenue par la solution habituelle représentée sur la figure 1, la puissance $P_S$ fournie par chaque source d'alimentation doit être supérieure ou égale à $\frac{N-1}{N-2} P_U$, où $P_U$ est la puissance absorbée par le module utilisateur alimenté par cette source.

En effet, en cas de court-circuit d'un module utilisateur, $U_2$ par exemple, impliquant la mise hors service des deux sources d'alimentation $S_1$ et $S_2$ qui assurent son alimentation, les N-2 sources d'alimentation restantes doivent pouvoir continuer à assurer l'alimentation des N-1 modules utilisateurs restants.

Il ressort de la relation $P_S \geqslant \frac{N-1}{N-2} P_U$, où $\frac{N-1}{N-2}$ est supérieur à 1, qu'une telle structure est d'autant plus intéressante que N est grand (le rapport $\frac{N-1}{N-2}$

tendant alors vers la valeur 1).

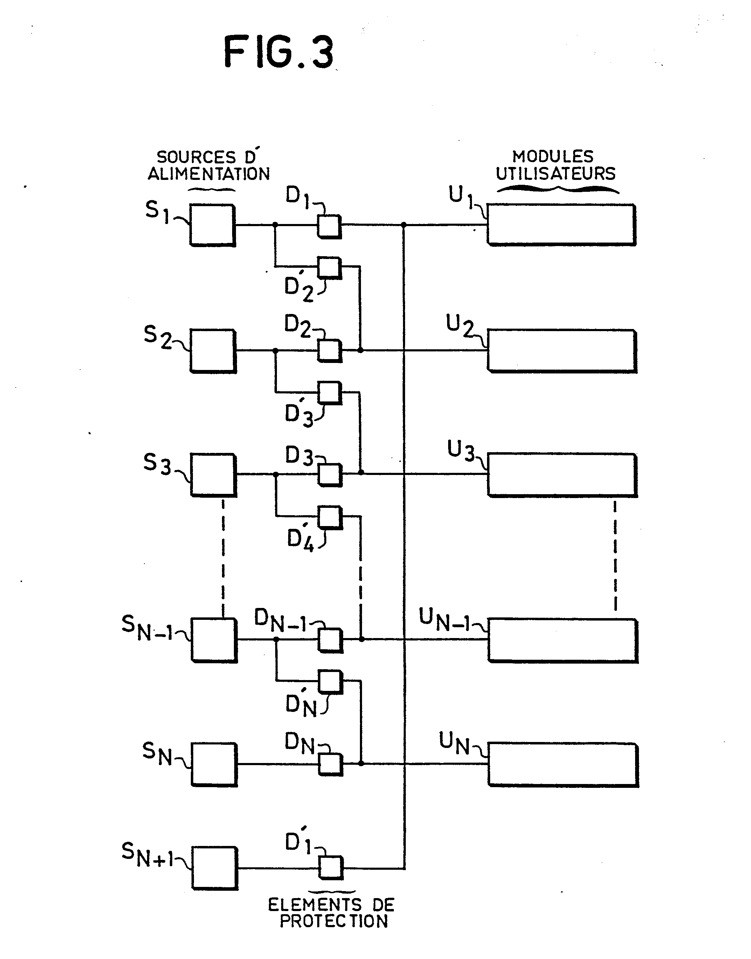

Pour N = 1, il est nécessaire d'utiliser un dispositif tel que celui représenté sur la figure 3.

Pour de faibles valeurs de N, on peut également avoir intérêt à utiliser un dispositif tel que celui représenté sur la figure 3.

Ce dispositif se distingue de celui représenté sur la figure 2 seulement par le fait que l'alimentation du module utilisateur $U_1$ est assurée concurremment par la source d'alimentation $S_1$ et par une source d'alimentation auxiliaire $S_{N+1}$.

Ce dispositif présente donc un caractère modulaire moins accentué que celui de la figure 2, mais plus accentué toutefois que celui de la figure 1. Il présente cependant l'avantage, par rapport au dispositif de la figure 2, de nécessiter une puissance $P_S$ moins élevée, puisque celle-ci doit seulement être $\geqslant P_U$.

Ce dispositif permet l'évolution vers une structure conforme à la figure 2 quand le nombre N augmente.

## REVENDICATIONS

1. Dispositif d'alimentation électrique de N modules utilisateurs $U_n$ (n variant de 1 à N), caractérisé en ce qu'il comporte M sources d'alimentation $S_m$ (m variant de 1 à M, M étant égal à N ou à N+1 quand N > 1, et M étant égal à N + 1 quand N = 1), l'alimentation du module utilisateur $U_n$ (n variant de 2 à N) étant assurée concurremment par la source d'alimentation $S_n$ et par la source d'alimentation $S_{n-1}$, et l'alimentation du module utilisateur $U_1$ étant assurée concurremment par la source d'alimentation $S_1$ et, soit la source d'alimentation $S_N$, soit la source d'alimentation $S_{N+1}$, suivant que M est égal à N ou à N+1, la source d'alimentation $S_m$ (m variant de 1 à M) fournissant une puissance

$$P_S \geqslant \frac{N-1}{N-2} P_U \;, \quad \text{ou} \quad P_S \geqslant P_U$$

où $P_U$ est la puissance absorbée par le module utilisateur alimenté par cette source) suivant que M est égal à N ou à N+1.

2. Dispositif selon la revendication 1, caractérisé en ce que chaque source d'alimentation est protégée contre les court-circuits des modules utilisateurs qu'elle alimente par des éléments de protection ($D_n$, $D'_n$).

# FIG.1

SOURCES D'
ALIMENTATION

MODULES
UTILISATEURS

$S_1$
$S_2$
$S_N$

$U_1$
$U_2$
$U_N$

ELEMENTS
DE
PROTECTION

$S_a$

SOURCES
D'ALIMENTATION
AUXILIAIRE

SOURCES D'
ALIMENTATION

MODULES UTILISATEURS

$S_1$  $D_1$  $U_1$
$D'_2$
$S_2$  $D_2$  $U_2$
$D'_3$
$S_3$  $D_3$  $U_3$
$D'_4$
$S_{N-1}$  $D_{N-1}$  $U_{N-1}$
$D'_N$
$S_N$  $D_N$  $U_N$
$D'_1$

ELEMENTS DE PROTECTION

FIG.2

1/2

0150853

# FIG.3

SOURCES D'
ALIMENTATION

MODULES
UTILISATEURS

$S_1$  $D_1$  $U_1$

$D'_2$

$S_2$  $D_2$  $U_2$

$D'_3$

$S_3$  $D_3$  $U_3$

$D'_4$

$S_{N-1}$  $D_{N-1}$  $U_{N-1}$

$D'_N$

$S_N$  $D_N$  $U_N$

$S_{N+1}$  $D'_1$

ELEMENTS DE
PROTECTION